# EUROPEAN PATENT APPLICATION

(11) **EP 2 608 606 A1**
(43) Date of publication of application: **26.06.2013**
(21) Application number: 11194591.1
(22) Date of filing: 20.12.2011
(51) Int. Cl.: H04W 48/18, H04W 88/06, H04W 76/02

(54) **Establishing a connection between a mobile terminal and a network**

(71) Applicant: Telefonaktiebolaget L M Ericsson AB (Publ), 164 83 Stockholm (SE)
(72) Inventor: Karlsson, Magnus, SE-224 72 Lund (SE); Christoffersson, Christian, SE-231 75 Beddingestrand (SE); Davisdsson, Marcus, SE-224 72 Lund (SE)
(74) Representative: Andersson, Karl Ola

(57) **Abstract**

A method of establishing a connection between a mobile terminal (1) and a network in a domain supported by said network using a radio access technology supported by said network, wherein the mobile terminal is capable of connecting to different networks in different domains and using different radio access technologies, comprises the steps of retaining in memory (8) of the mobile terminal a list (9) of connection details for previous connections of the terminal to networks, said connection details comprising at least a domain and a radio access technology for each retained previous connection; obtaining, at power-on of the mobile terminal or recovery from loss of coverage, connection details from said list; and establishing a connection between the mobile terminal and a network using said obtained connection details. This increases chances for returning to the network and the radio access technology that was last used before switching the terminal off.

## Description

### Technical Field

The invention relates to establishing a connection between a mobile terminal and a network in a domain supported by the network and using a radio access technology supported by the network.

### Background

The technical specification 3GPP TS 23.122 issued by the standards-developing organization Third-Generation Partnership Project (3GPP) specifies selection of a Public Land Mobile Network (PLMN) in idle mode of a mobile terminal or device for all 3GPP Radio Access Technologies (RATs), such as for example GSM/EDGE Radio Access Network (GERAN), UMTS Radio Access Network (UTRAN) and Evolved UMTS Radio Access Network (EUTRAN). The purpose of the function is to steer the device to the most preferred PLMN according to preferences set by the user and the operator. In order to avoid excessive ping pong effects, the concept of "Last Registered PLMN" (LRPLMN) makes sure that the last registered PLMN always gets highest priority at recovery from loss of coverage or at power on.

The LRPLMN concept was introduced back when only a (Circuit Switched (CS) domain existed, and hence the LRPLMN was derived from the PLMN the device was CS registered in. When the Packet Switched (PS) domain was introduced through GPRS (General Packet Radio Services), the definition of LRPLMN was partly relaxed, although it still hinted at heavily relying on the CS domain information since all devices and networks still always had a CS domain. However with PS-only devices becoming more common (mobile broadband modems for example), and even more so with the introduction of Evolved Packet Switched (EPS) which has no CS domain, it is suddenly not at all uncommon that the last registered PLMNs for CS, PS and EPS are different from each other and it does not make sense anymore to always primarily look at the LRPLMN for CS, because the device may not recently have been connected to a network in a CS domain.

### Summary

Therefore, it is an object of embodiments of the invention to provide a method of establishing a connection between a mobile terminal and a network that increases the chances for returning to the serving network and the radio access technology that was last used before switching the mobile terminal off, and which also minimizes the average time spent to get full service.

According to embodiments of the invention the object is achieved in a method of establishing a connection between a mobile terminal and a network in a domain supported by said network using a radio access technology supported by said network, wherein the mobile terminal is capable of connecting to different networks in different domains and using different radio access technologies. The object is achieved when the method comprises the steps of retaining in memory of the mobile terminal a list of connection details for previous connections of the mobile terminal to networks, said connection details comprising at least a domain and a radio access technology for each retained previous connection; obtaining, at power-on of the mobile terminal or recovery from loss of coverage, connection details from said list; and establishing a connection between the mobile terminal and a network using said obtained connection details.

When a list of connection details for previous connections including domain and radio access technology is retained in the mobile terminal and the details from this list are used for establishing a new connection after a power off or loss of coverage situation the chances of returning quickly to the same network are increased.

Thus an algorithm is provided for optimizing the chances of selecting the most recent LRPLMN and RAT at power on and recovery from loss of coverage (in cases where there is more than one) in a way that brings the device back in service as fast as possible and still on what can be considered to be the LRPLMN, taking into account additional parameters such as for example "Last Registered RAT" (LRRAT) and which domains or RATs are activated. Thus the device is brought back in service as fast as possible and still on what can be considered to be the LRPLMN in the LRRAT. The method also avoids using valid information relevant only to certain RATs or domains if these are not enabled.

In some embodiments, the step of obtaining connection details from said list comprises the step of obtaining connection details for the most recent retained connection for which the retained domain is active and the retained radio access technology is supported and for which a location information is updated. In this way it is ensured that a connection can be established to the most recent valid network.

The step of establishing a connection may then comprise the steps of selecting a network corresponding to the retained domain of said most recent retained connection; and establishing a connection to said selected network using the retained radio access technology for said most recent retained connection.

Information regarding the network corresponding to the retained domain of said most recent retained connection may be obtained from location information retained on a Subscriber Identity Module (SIM) in the mobile terminal.

In some embodiments the steps of obtaining connection details from said list and establishing a connection comprise the steps of obtaining connection details for the most recent retained connection for which the retained domain is active and the retained radio access technology is supported; selecting, if a location information for the most recent retained connection is not updated, as network a Home Public Land Mobile Network (HPLMN) retained on a Subscriber Identity Module in the mobile terminal; and establishing a connection to said selected Home Public Land Mobile Network using the retained radio access technology for said most recent retained connection if said Home Public Land Mobile Network is present in said list of connection details for previous connections, and using a priority radio access technology retained on said Subscriber Identity Module otherwise. In this way it is ensured that a connection can be established quickly also in cases where the location information is not updated.

In some embodiments the steps of obtaining connection details from said list and establishing a connection comprise the steps of obtaining, at activation of the mobile terminal, connection details for the most recent retained connection for which the retained domain is active and the retained radio access technology is supported; preselecting a last registered Public Land Mobile Network; initiating cell selection for said preselected last registered Public Land Mobile Network using the retained radio access technology for said most recent retained connection; obtaining again, when a Subscriber Identity Module in the mobile terminal is available and unlocked, connection details for the most recent retained connection for which the retained domain is active and the retained radio access technology is supported and for which a location information is updated; selecting a network corresponding to the retained domain of said most recent retained connection; and establishing a connection to said selected network using the retained radio access technology for said most recent retained connection. The purpose of this is to optimize the chances of having already started looking for and potentially already found a cell of the PLMN and RAT that will be selected eventually once the SIM becomes available.

The method may further comprise the step of retaining in said list of connection details an International Mobile Subscriber Identity (IMSI) of a Subscriber Identity Module that was used in the mobile terminal for said previous connections. This allows the mobile terminal to check whether the same SIM card is used before and after a power off period or a loss of coverage. Some embodiments of the invention also relate to a mobile terminal capable of establishing a connection between the mobile terminal and a network in a domain supported by said network using a radio access technology supported by said network, wherein the mobile terminal is capable of connecting to different networks in different domains and using different radio access technologies. The mobile terminal is configured to retain in memory of the mobile terminal a list of connection details for previous connections of the mobile terminal to networks, said connection details comprising at least a domain and a radio access technology for each retained previous connection; obtain, at power-on of the mobile terminal or recovery from loss of coverage, connection details from said list; and establish a connection between the mobile terminal and a network using said obtained connection details. When a list of connection details for previous connections including domain and radio access technology is retained in the mobile terminal and the details from this list are used for establishing a new connection after a power off or loss of coverage situation the chances of returning quickly to the same network are increased.

Embodiments corresponding to those mentioned above for the method also apply for the mobile terminal.

Some embodiments of the invention relate to a computer program and a computer readable medium with program code means for performing the method described above.

### Brief Description of the Drawings

Embodiments of the invention will now be described more fully below with reference to the drawings, in which
Figure 1 shows a block diagram of a mobile terminal in which embodiments of the invention may be implemented;
Figure 2 shows an example of a Domain Registration History List;
Figure 3 shows another example of a Domain Registration History List;
Figure 4 shows an example of SIM data stored on a SIM card;
Figure 5 shows an example of a list of last registered Public Land Mobile Networks;
Figure 6 shows an example of a default Radio Access Technology priority list;
Figure 7 shows a flow chart illustrating the disclosed method;
Figure 8 shows a flow chart illustrating how to obtain connection details from the Domain Registration History List;
Figure 9 shows a flow chart illustrating how an element is read from the Domain Registration History List;
Figure 10 shows a flow chart illustrating how to obtain connection details from the Domain Registration History List before a SIM card is available;
Figure 11 shows a flow chart illustrating how to obtain connection details from the Domain Registration History List again after a SIM card has become available; and
Figure 12 shows a flow chart illustrating some options for the flow chart of Figure 11.

### Detailed Description

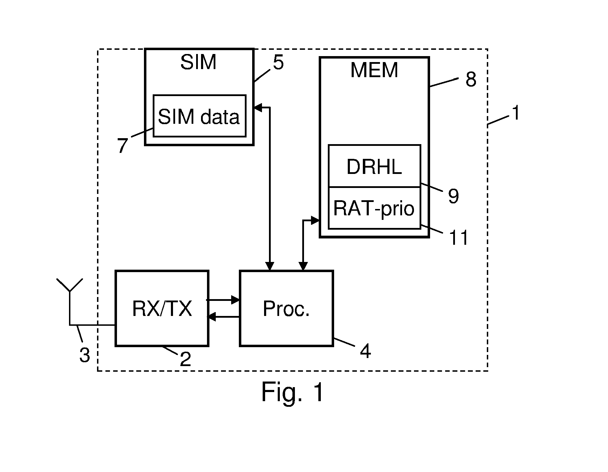

Figure 1 shows a block diagram of a mobile terminal 1 in which some embodiments of the invention may be implemented. Receiver/transmitter circuitry 2 is configured to communicate via an antenna 3 with one or more base stations of one or more networks, so-called Public Land Mobile Networks (PLMNs), while a data processing unit 4 (i.e. a processor, a programmable logic controller or similar) is configured to take care of data processing, including selection of a network to connect to after power on or recovery from loss of coverage. Connected to the processing unit 4 are also a Subscriber Identity Module (SIM) card 5 and a memory 8, i.e. a storage in which data bases, lists, etc. may be stored. The memory 8 is typically a non-volatile memory.

Stored in the memory 8 is a list 9 for retaining connection details for previous connections of the mobile terminal to networks. The retained connection details comprise at least a domain (i.e. Circuit Switched domain, Packet Switched domain or Evolved Packet Switched domain) and a radio access technology, i.e. RAT (e.g. GSM/GERAN, UMTS/UTRAN or EUTRAN) for each retained previous connection. The list 9 is here also referred to as a Domain Registration History List (DRHL), and it is used to keep track of the order in which successful registrations have taken place with respect to domain. In addition to domain, the DRHL may also contain meta-data that can be used to further optimize selection with regards to configuration settings in the device. To each entry in the DRHL it is also possible to associate RAT specific information, e.g. last visited frequencies, in order to speed up cell search/selection and PLMN selection. The DRHL may store several entries with the same Domain but different combinations of RAT/PLMN/visited frequencies.

It is here noted that the term "connection" is often used as referring to an ongoing actual radio connection, the counterpart of which is"idle". This is not the case here because PLMN selection is actually done in "idle". Thus the term "connection" is here used more generally on a conceptual high level.

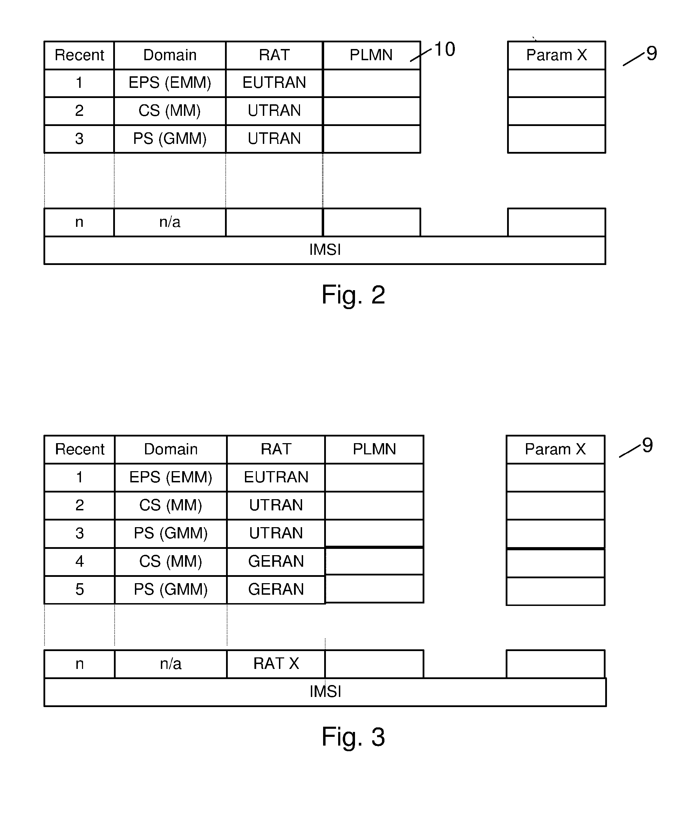

As mentioned, the DRHL is stored in non-volatile memory 8 in the mobile equipment 1. The DRHL list also contains the International Mobile Subscriber Identity (IMSI) of the SIM (see below) that was used for populating it. The DRHL is populated at successful registrations, and is sorted in chronological order with the most recent entry at the top of the list. An example of a DRHL 9 is shown in Figure 2. It can be seen that the most recent connection was in an Evolved Packet Switching (EPS) domain under EPS Mobility Management (EMM) using EUTRAN as the radio access technology. As it can be seen, the list may also contain information 10 about the network (PLMN) or other parameters (Param X) for the connection. The other parameters may include Circuit Switched Fall Back (CSFB) information or IMS emergency call support, etc. Before the most recent connection there was a circuit switched connection using UTRAN as the radio access technology, and before that a packet switched connection using UTRAN as the radio access technology. As mentioned, also the IMSI of the SIM card that was used during creation of the list is retained in the DRHL. Another example of a DRHL is shown in Figure 3. The list is initiated based on default RAT priorities (see below).

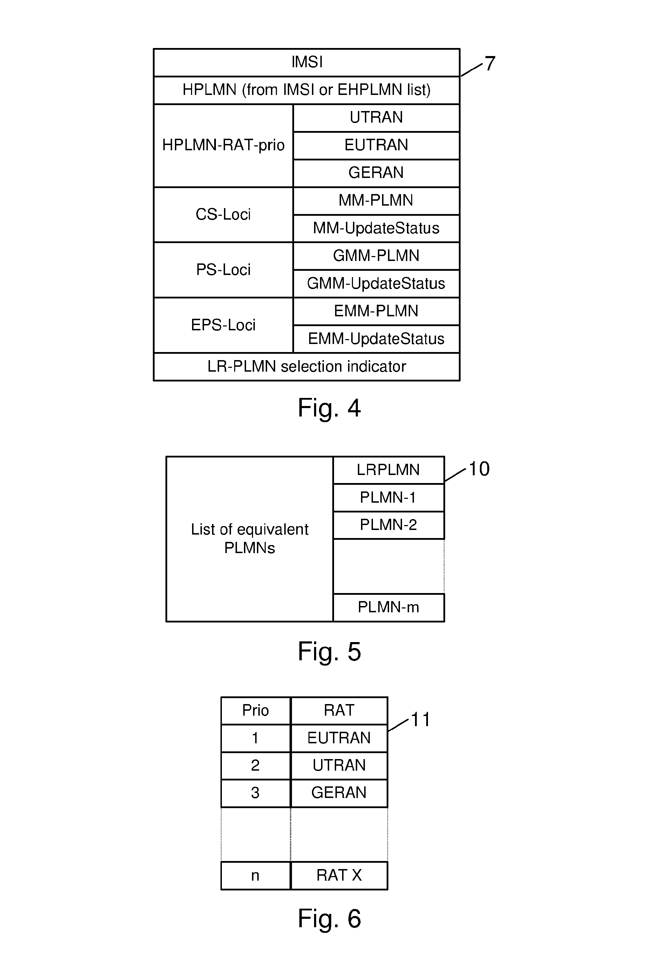

Figure 4 illustrates an example of SIM data 7 stored on the SIM card 5. These data comprise the International Mobile Subscriber Identity (IMSI) of the SIM card and a Home PLMN (HPLMN) for the SIM card. The HPLMN may be arrived from the IMSI or from a list of Equivalent Home PLMNs (EHPLMNs). A priority list of RATs for the HPLMN is also specified. The SIM data 7 also comprise location information (LOCI) for each relevant domain. The LOCI for each domain specifies a network (PLMN) and an update status. Finally, the data also retains a selection indicator for a Last Registered PLMN (LRPLMN), which indicates if HPLMN may be used instead of LRPLMN if HPLMN happens to be found before LRPLMN. Instead of a normal SIM card, a Universal Subscriber Identity Module (USIM) may be used. A USIM is an application for UMTS mobile telephony running on a smart card which is inserted in a 3G mobile phone. It stores user subscriber information, authentication information and provides storage space for text messages and phone book contacts. It is noted that on a USIM the fields PS-LOCI and EPS-LOCI are optional files, and if they are not available on the USIM, they are instead stored in non-volatile memory (tagged with IMSI).

As mentioned above, the DRHL 9 may in some embodiments include information 10 of Last Registered PLMNs (LRPLMN), including equivalent PLMNs. An example of this list is illustrated in Figure 5. Thus each DRHL entry may contain corresponding information, i.e. the PLMN entry 10 in the DRHL 9 is a list where the first PLMN is the LRPLMN and the rest of the PLMNs (if available) are the equivalent PLMNs to this LRPLMN.

Further, the memory 8 may include a Default RAT priority list 11, which is illustrated in Figure 6.

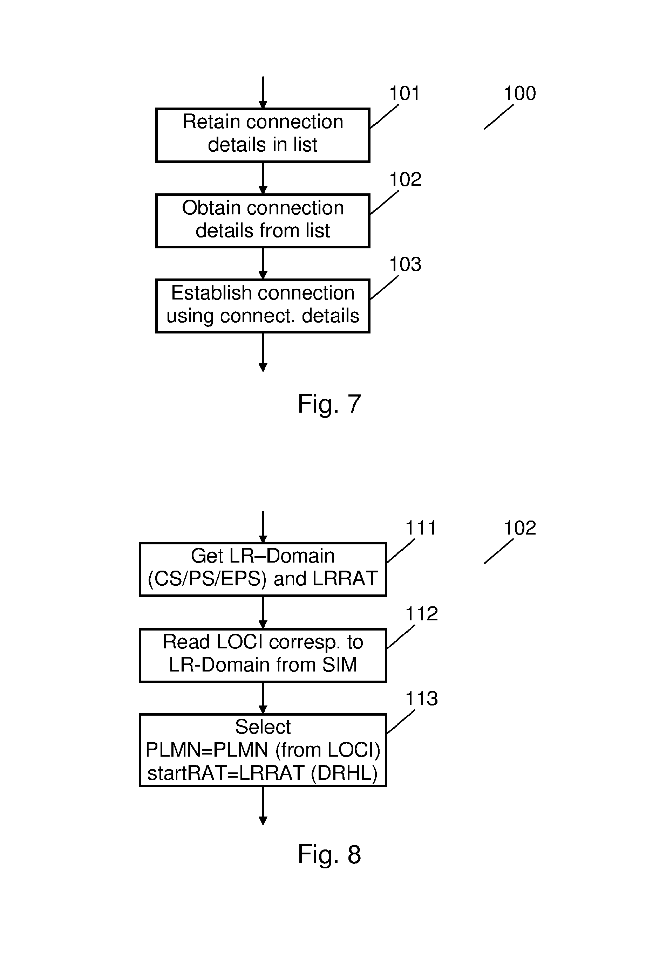

The main purpose of the DRHL list 9 is to remember the last registered domain in order to be able to select the CS/PS/EPS-LOCI from the SIM card 5 at power on of the mobile terminal 1. The idea extends, and is in line with, current 3GPP behaviour. A flow chart 100 illustrating the method is shown in Figure 7. In step 101, which is performed while the mobile terminal is connected to a network, connection details regarding the current connection are stored in the DRHL list 9, so that this list retains such details for a number of previous connections. The connection details comprise at least a domain and a radio access technology for each retained previous connection. When the mobile terminal is switched on after having been switched off or is recovered from a loss of coverage connection details are obtained from the DRHL 9 in step 102, and the obtained connection details are used for establishing a connection between the mobile terminal and a network in step 103.

For one embodiment, step 102 is described in further detail below and illustrated in the flow chart shown in Figure 8. In step 111 the processing unit 4 gets the last registered domain (i.e. CS, PS or EPS) and RAT from the DRHL list 9. This step is described in further detail below. Provided that a list element is returned from the DRHL, the LOCI corresponding to the last registered domain is then in step 112 obtained from the SIM card 5. The LOCI contains, among other things, PLMN and update status. The PS-LOCI and EPS-LOCI are optional on the SIM card, and thus they may be stored in non-volatile memory instead. Then in step 113 the PLMN to which a connection is established is selected as the PLMN obtained from the LOCI, and the start RAT is selected as the last registered RAT read from the DRHL.

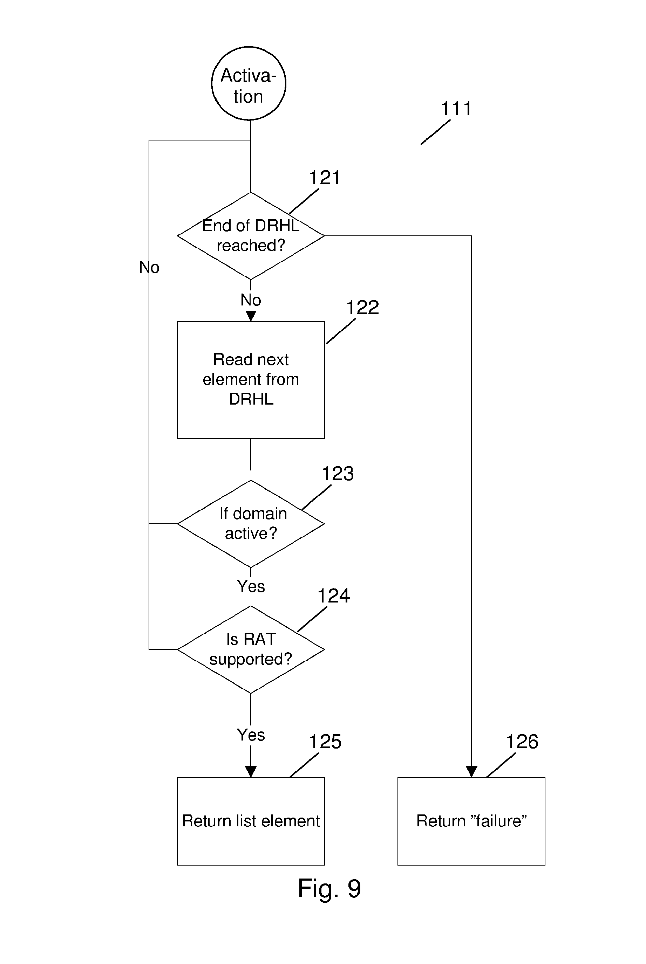

Step 111 is described in further detail with reference to the flow chart shown in Figure 9. First, in step 121 it is checked if the end of the DRHL is reached, i.e. if there are remaining elements in the list that have not yet been checked. If the end of the list has been reached a "failure" is returned in step 126. Otherwise, the next element from the list is read in step 122, and it is checked in steps 123 and 124 if the domain is active and if the RAT is supported. If the answer is "no" to one of these questions the process returns to step 121 to see if there are more elements to check. Otherwise, i.e. if the domain is active and the RAT is supported, the list element is returned to step 112 in Figure 8.

In some embodiments the DRHL list can be used in different scenarios to select a Last Registered PLMN and a Last Registered RAT. In one example, the DRHL is first used at power on/activation to select a PLMN and a RAT on which to start initial cell selection before the SIM is available and unlocked. When the SIM is unlocked the DRHL is used again to select which SIM LOCI field (CS, PS or EPS) to use for PLMN selection in order to get back into service where the device was last registered. This is a normal scenario, which is described in further detail below.

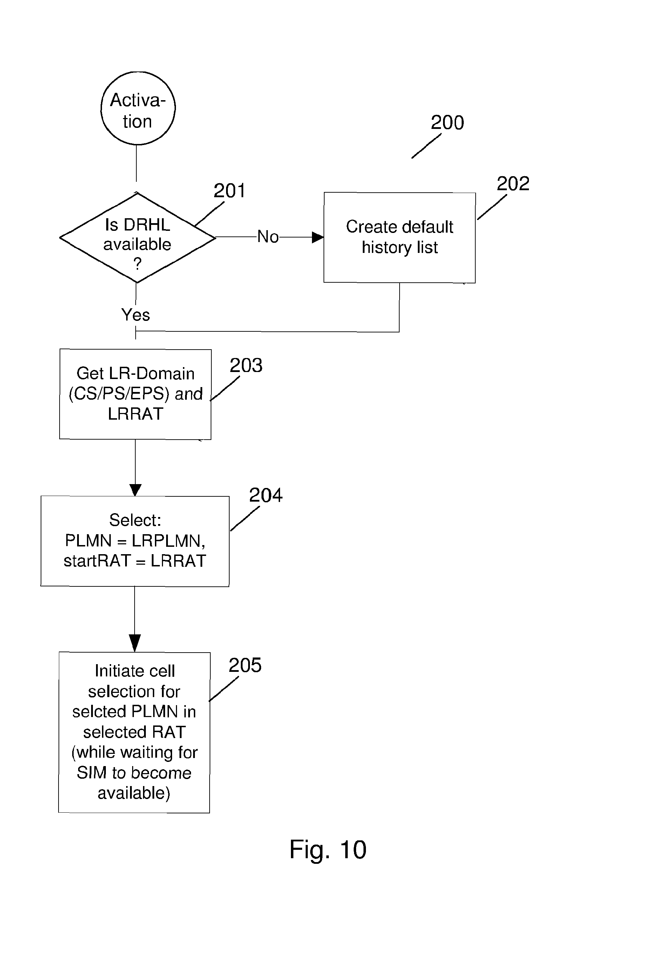

First, at power on/activation the DRHL is evaluated in order to get a PLMN and a RAT on where to obtain emergency service while waiting for the SIM to become available. This is illustrated in the flow chart 200 shown in Figure 10. First, in step 201 it is checked whether a DRHL is actually available. If this is not the case a default history list is created in step 202, where the history list is initiated so that it contains at least one valid entry regardless of device configuration. The order can for example be based on default RAT priority. If a DRHL was available or when it has been created in step 202, the processing unit 4 gets the last registered domain (i.e. CS, PS or EPS) and RAT from the DRHL list 9 in step 203. This step is similar to step 111 in Figure 8 and is thus described in detail above with reference to the flow chart shown in Figure 9. Provided that a list element is returned from the DRHL, the PLMN to which a connection is established is then selected in step 204 as the PLMN obtained from the LRPLMN list 10 of the DRHL 9, and the start RAT is selected as the last registered RAT read from the DRHL. In step 205 cell selection is then initiated for the selected PLMN in the selected RAT while waiting for the SIM to become available. Even though the DRHL is tagged with IMSI, no check is done regarding this at this point, for obvious reasons (i.e. the SIM not available yet). The purpose of this process is to optimize the chances of having already started looking for and potentially already found a cell of the PLMN and RAT that will be selected eventually once the SIM becomes available.

The procedure when the SIM becomes available depends on whether it is the same SIM before and after the power cycle or the SIM used after the power cycle is different from the SIM that was used before the power cycle. First, the situation is described for the same SIM.

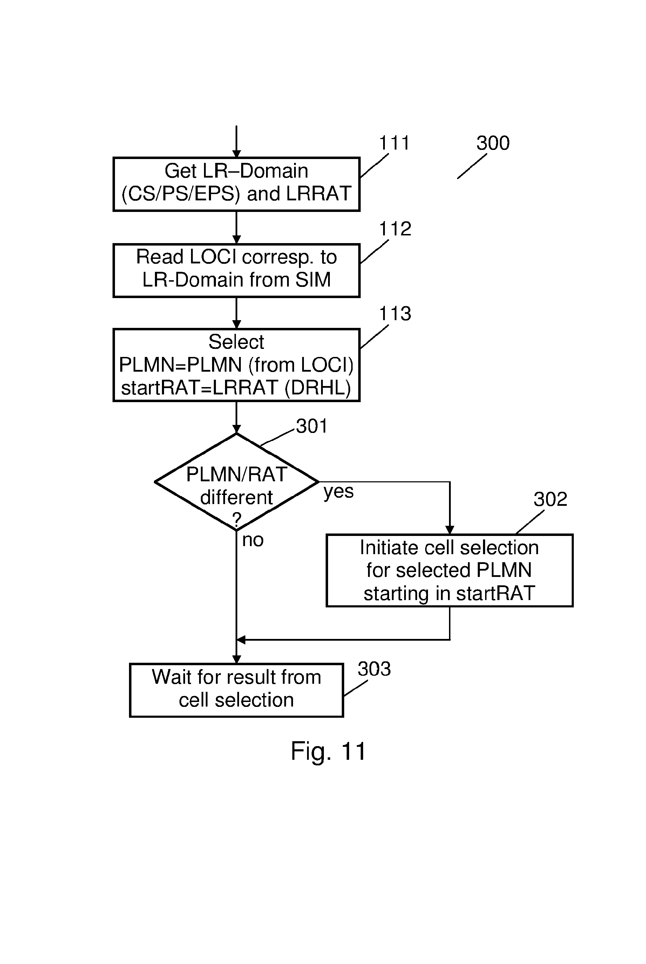

When the SIM becomes available the DRHL is again evaluated in order to find out which one of the LOCI fields on the SIM to obtain PLMN and update status from. This is done as illustrated in the flow chart 300 shown in Figure 11 and described above. The first three steps, i.e. steps 111, 112 and 113 are the same as those of the flow chart 102 of Figure 8. Thus in step 111 the processing unit 4 gets the last registered domain (i.e. CS, PS or EPS) and RAT from the DRHL list 9. Provided that a list element is returned from the DRHL, the LOCI corresponding to the last registered domain is then in step 112 obtained from the SIM card 5. Then in step 113 the PLMN to which a connection is established is selected as the PLMN obtained from the LOCI, and the start RAT is selected as the last registered RAT read from the DRHL. In a normal situation this will be the same PLMN as was selected for emergency service in the previous step (power on / activation), and no new cell selection will be necessary. This is checked in step 301. If the PLMN and RAT are the same as for activation, the process continues to step 303 waiting for the result of the cell selection. However, if the selected PLMN or RAT is different from what was selected at activation, cell selection for the selected PLMN is initiated starting in startRAT in step 302 before waiting for the result of the cell selection in step 303.

In some embodiments it may be checked between steps 112 and 113 whether the read LOCI information is updated. Should it be that the selected LOCI indicates that the device is "not updated", then the algorithm would normally continue looking for a LOCI field that does indicate "updated" (this kind of goes along with the current 3GPP definition of "updated", i.e. if the device is updated in some domain then it is updated, and that PLMN should be honored instead of the Home PLMN (HPLMN) which would have been selected if the device was "not updated").

If the SIM used after the power cycle is different from the SIM that was used before the power cycle the situation is a little different. When the SIM becomes available the DRHL is again evaluated in order to find out which one of the LOCI fields on the SIM to obtain PLMN and update status from. As the DRHL when populated was connected to a different SIM (IMSI), its contents will not be in sync with current SIM. This means that the likelihood of initially selecting a LOCI field indicating "not updated" increases. The preferable behavior would then be to continue looking for a LOCI that indicates "updated". The setting of the configurable option to look for updated LOCI could be ignored in case of IMSI mismatch, so that it would always continue looking for a LOCI indicating "updated".

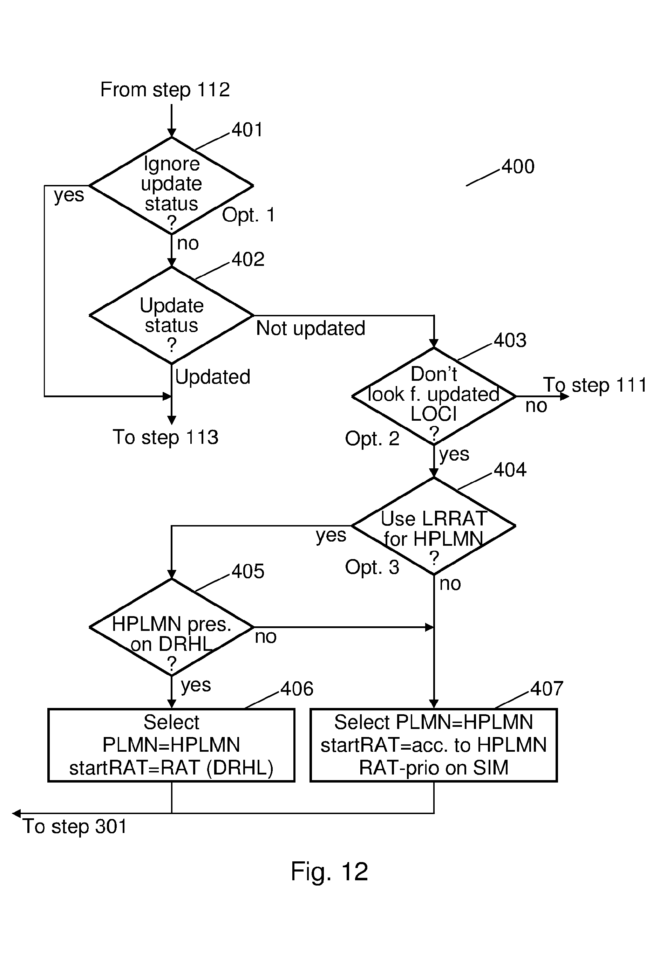

As mentioned above, the option to check for the update status of the LOCI may be inserted in the flow chart of Figure 11. This is illustrated in the flow chart 400 shown in Figure 12, which also shows a few other options. Option 1 decides in step 401 whether the update status of the LOCI (read in step 112) should be ignored or not. If this option is set to "yes" the procedure continues with step 113 as shown in Figure 11. On the other hand, if option 1 is set to "no" the update status is checked in step 402. If the LOCI read in step 112 indicates that the device is updated the procedure again continues with step 113. However, if the device is not updated the procedure goes to option 2 ("don't look for updated LOCI?") in step 403. If option 2 is set to "no", i.e. there should be looked for updated LOCI, the procedure returns to step 111 to get a new list element in the DRHL. Otherwise, i.e. if the procedure should not look for updated LOCI, the procedure goes to option 3 ("Use LRRAT for HPLMN?") in step 403. If option 3 is set to "no", or if the HPLMN is not present anywhere on the DRHL (step 405), the HPLMN is selected as PLMN and the startRAT is selected according to the HPLMN RAT priority on the SIM in step 407 before continuing to step 301. Otherwise, i.e. if option 3 is set to "yes", and the HPLMN is present on the DRHL (step 405), the HPLMN is selected as PLMN and the startRAT is selected as the RAT read from the DRHL in step 406 before continuing to step 301.

Another scenario is recovery from loss of coverage. Although the technical specification 3GPP TS 23.122 issued by the standards-developing organization Third-Generation Partnership Project (3GPP) specifies common handling of power on and recovery from loss of coverage, there is a difference in the sense that in case of recovery from loss of coverage, it is always known which LOCI that contains the most recent LRPLMN since it happens in runtime. And although only the most recent LOCI should be used in this scenario to retrieve the LRPLMN, the DRHL could still serve as the common method to remember the timeline between different LOCIs.

Regarding search order there are also some alternatives. Common algorithm behavior is that each RAT is scanned at most once. Unless the scan is stopped before all RATs have been scanned, due to that the stop criteria is met, a normal PLMN selection will be performed on the accumulated scan result. The wanted PLMN and start RAT are derived from the DRHL and SIM, as described above.

The default (3GPP) behavior is to start scanning for the wanted PLMN in the start RAT. If not found in this RAT, the remaining RATs are searched in preference order (derived from SIM and/or default configuration).

One alternative to the default behavior is Option 4 (Scan for specific PLMN/RAT combination according to DRHL), which is to start scanning for the wanted PLMN in the start RAT (only the start RAT is scanned). If the PLMN is not found in this RAT, derive a new PLMN and start RAT from the DRHL and SIM (if the new start RAT has already been scanned in previous step, then no new scan is necessary). The algorithm is stopped when all RATs have been scanned or when all entries in DRHL and SIM have been used. If no PLMN/RAT from DRHL is found, then continue to scan remaining RATs if not already done (e.g. according to default behavior).

A second alternative to the default behavior is Option 5 (Scan for "any" PLMN in specific RAT), which is to start scanning for the wanted PLMN in the start RAT. If the PLMN is not found in the start RAT but other PLMNs are, then select one of these according to normal PLMN selection algorithms. If no other PLMNs are found, then proceed to the next entry in the DRHL / SIM (containing a different RAT) and do the same procedure again.

It is noted that before full scan is performed it is possible to do a fast scan using the visited frequencies stored in the DRHL. It could be done e.g. according to an algorithm/search order as described in above, but only the stored frequencies are searched. Optionally, visited frequencies stored in DRHL belonging to PLMNs not matching any LRPLMN/HPLMN on the SIM can still be included in fast scan, and such PLMN might be selected (normally with lower priority than PLMNs on SIM) for faster service.

Configurable options 1-5 mentioned above, i.e. options 1-3 in relation to Figure 12 and options 4 and 5 in relation to the search order, can be used to customize the behavior. The setting of the above mentioned options is not important for the idea, but possible default settings could be:
- OPTION 1: No
- OPTION 2: No
- OPTION 3: No
- OPTION 4: No
- OPTION 5: No

Although various embodiments of the present invention have been described and shown, the invention is not restricted thereto, but may also be embodied in other ways within the scope of the subject-matter defined in the following claims.

## Claims

1. A method of establishing a connection between a mobile terminal (1) and a network in a domain supported by said network using a radio access technology supported by said network, wherein the mobile terminal is capable of connecting to different networks in different domains and using different radio access technologies,
**characterized in that** the method comprises the steps of:
• retaining (101) in memory (8) of the mobile terminal a list (9) of connection details for previous connections of the mobile terminal (1) to networks, said connection details comprising at least a domain and a radio access technology for each retained previous connection;
• obtaining (102), at power-on of the mobile terminal (1) or recovery from loss of coverage, connection details from said list (9); and
• establishing (103) a connection between the mobile terminal (1) and a network using said obtained connection details.

2. A method according to claim 1, **characterized in that** the step of obtaining (102) connection details from said list (9) comprises the step of:
• obtaining connection details for the most recent retained connection for which the retained domain is active and the retained radio access technology is supported and for which a location information is updated.

3. A method according to claim 2, **characterized in that** the step of establishing (103) a connection comprises the steps of:
• selecting (113) a network corresponding to the retained domain of said most recent retained connection; and
• establishing a connection to said selected network using the retained radio access technology for said most recent retained connection.

4. A method according to claim 3, **characterized in that** information regarding the network corresponding to the retained domain of said most recent retained connection is obtained (112) from location information retained on a Subscriber Identity Module (5) in the mobile terminal.

5. A method according to claim 1, **characterized in that** the steps of obtaining connection details from said list (9) and establishing a connection comprise the steps of:
• obtaining connection details for the most recent retained connection for which the retained domain is active and the retained radio access technology is supported;
• selecting (406; 407), if a location information for the most recent retained connection is not updated, as network a Home Public Land Mobile Network retained on a Subscriber Identity Module in the mobile terminal; and
• establishing a connection to said selected Home Public Land Mobile Network using (406) the retained radio access technology for said most recent retained connection if said Home Public Land Mobile Network is present in said list of connection details for previous connections, and using (407) a priority radio access technology retained on said Subscriber Identity Module otherwise.

6. A method according to claim 1, **characterized in that** the steps of obtaining (102) connection details from said list and establishing (103) a connection comprise the steps of:
• obtaining (203), at activation of the mobile terminal, connection details for the most recent retained connection for which the retained domain is active and the retained radio access technology is supported;
• preselecting (204) a last registered Public Land Mobile Network;
• initiating (205) cell selection for said preselected last registered Public Land Mobile Network using the retained radio access technology for said most recent retained connection;
• obtaining again (111), when a Subscriber Identity Module (5) in the mobile terminal is available and unlocked, connection details for the most recent retained connection for which the retained domain is active and the retained radio access technology is supported and for which a location information is updated;
• selecting (113) a network corresponding to the retained domain of said most recent retained connection; and
• establishing a connection to said selected network using the retained radio access technology for said most recent retained connection.

7. A method according to any one of claims 1 to 6, **characterized in that** the method further comprises the step of retaining in said list (9) of connection details an International Mobile Subscriber Identity of a Subscriber Identity Module (5) that was used in the mobile terminal for said previous connections.

8. A mobile terminal (1) capable of establishing a connection between the mobile terminal and a network in a domain supported by said network using a radio access technology supported by said network, wherein the mobile terminal (1) is capable of connecting to different networks in different domains and using different radio access technologies, **characterized in that** the mobile terminal (1) is configured to:
• retain in memory (8) of the mobile terminal a list (9) of connection details for previous connections of the mobile terminal (1) to networks, said connection details comprising at least a domain and a radio access technology for each retained previous connection;
• obtain, at power-on of the mobile terminal (1) or recovery from loss of coverage, connection details from said list (9); and
• establish a connection between the mobile terminal (1) and a network using said obtained connection details.

9. A mobile terminal according to claim 8, **characterized in that** the mobile terminal (1) is configured to obtain connection details from said list (9) by:
• obtaining connection details for the most recent retained connection for which the retained domain is active and the retained radio access technology is supported and for which a location information is updated.

10. A mobile terminal according to claim 9, **characterized in that** the mobile terminal (1) is configured to establish a connection by:
• selecting a network corresponding to the retained domain of said most recent retained connection; and
• establishing a connection to said selected network using the retained radio access technology for said most recent retained connection.

11. A mobile terminal according to claim 10, **characterized in that** information regarding the network corresponding to the retained domain of said most recent retained connection can be obtained from location information retained on a Subscriber Identity Module (5) in the mobile terminal (1).

12. A mobile terminal according to claim 8, **characterized in that** the mobile terminal (1) is configured to obtain connection details from said list (9) and establish a connection by:
• obtaining connection details for the most recent retained connection for which the retained domain is active and the retained radio access technology is supported;
• selecting, if a location information for the most recent retained connection is not updated, as network a Home Public Land Mobile Network retained on a Subscriber Identity Module (5) in the mobile terminal (1); and
• establishing a connection to said selected Home Public Land Mobile Network using the retained radio access technology for said most recent retained connection if said Home Public Land Mobile Network is present in said list (9) of connection details for previous connections, and using a priority radio access technology retained on said Subscriber Identity Module (5) otherwise.

13. A mobile terminal according to claim 8, **characterized in that** the mobile terminal (1) is configured to obtain connection details from said list (9) and establish a connection by:
• obtaining, at activation of the mobile terminal, connection details for the most recent retained connection for which the retained domain is active and the retained radio access technology is supported;
• preselecting a last registered Public Land Mobile Network;
• initiating cell selection for said preselected last registered Public Land Mobile Network using the retained radio access technology for said most recent retained connection;
• obtaining again, when a Subscriber Identity Module (5) in the mobile terminal (1) is available and unlocked, connection details for the most recent retained connection for which the retained domain is active and the retained radio access technology is supported and for which a location information is updated;
• selecting a network corresponding to the retained domain of said most recent retained connection; and
• establishing a connection to said selected network using the retained radio access technology for said most recent retained connection.

14. A mobile terminal according to any one of claims 8 to 13, **characterized in that** the mobile terminal (1) is further configured to retain in said list (9) of connection details an International Mobile Subscriber Identity of a Subscriber Identity Module (5) that was used in the mobile terminal (1) for said previous connections.

15. A computer program comprising program code means for performing the steps of any one of the claims 1 to 7 when said computer program is run on a computer.

16. A computer readable medium having stored thereon program code means for performing the method of any one of the claims 1 to 7 when said program code means is run on a computer.
